# EUROPEAN PATENT APPLICATION

(11) **EP 1 333 400 A1**
(43) Date of publication of application: **06.08.2003**
(21) Application number: 02405073.4
(22) Date of filing: 04.02.2002
(51) Int. Cl.: G06K 7/00

(54) **Access protected computer with integrated smart card reader**

(71) Applicant: Digital-Logic AG, 4542 Luterbach (CH)
(72) Inventor: Kunz, Felix, 4515 Oberdorf (CH)
(74) Representative: Frei, Alexandra Sarah

(57) **Abstract**

Access protected computer (2) comprising means (20) for interfacing a smart card (6), characterized in that the means (20) are mounted onto or are part of a printed wiring board (2q) of the computer (2).

## Description

### BACKGROUND OF THE INVENTION

The invention is directed to an access protected computer in accordance with the preamble of the independent claim 1.

It is well known to use a smart card in order to restrict the access to a computer for authorized users only. The term "smart card" herein denotes any device which may be conveniently carried upon one's person and which contains an active internal logic device capable of securely interfacing with and exchanging data with specifically authorized external devices. Smart cards are sometimes referred to as "integrated circuit cards" or "chip cards". Smart cards are generally described by a set of international standards well-know in the art, including ISO 7810, ISO 7811, ISO/IEC 7812, ISO 7813, ISO/IEC 7816, ISO/IEC 10373, IOS/IEC 10536 and ISO/IEC 14443, all of which are herein collectively denoted by the term "standards for integrated circuit cards" and incorporated by reference for all purposes as if fully set forth herein.

Purposes to which smart cards may be applied includes performing financial transaction, establishing personal identity, providing access control, managing accounting information, and storing and retrieving personal records, for example in health care. Smart cards are characterized by a high level of security, and are the medium of choice for storing sensitive information.

One disadvantage of using a smart card in combination with a computer is, that when the smart card is used for identification purposes with a personal computer, this leads to a serious security weakness. Smart cards may contain a variety of identification-related data objects and capabilities, such as digital certificates, secret cryptographic keys, and other date objects related to digital signatures and similar verification schemes. In some systems, access to a personal computer may require operator authentication. A smart card is considered to provide a higher level of confidence in operator identity than the use of passwords alone. The use of a personal computer presents a serious security problem, because the hardware is not designed to resist tampering, and much of the operation takes place in software that is readily accessible to an attacker. For example the electrical connections of the smart card can be tapped.

### SUMMARY OF THE INVENTION

The invention is therefore based on the object of specifying measures for an access protected computer.

To accomplish these objects, the access protected computer of the present invention comprises the features of the independent patent claim 1. The subordinate claims 2 to 10 relate to further advantageously designed computers.

The object is in particular satisfied by an access protected computer comprising means for interfacing a smart card, the means being mounted onto or are part of a printed wiring board of the computer.

In one preferred embodiment, the reading head comprising the contact elements for interfacing the smart card is directly mounted on the printed wiring board, for example by SMD (surface mounted device) technology. In another preferred embodiment, the contact elements are part of the printed wiring board. The contact elements projecting the printed wiring board.

One advantage of the access protected computer according to the invention is, that there is no electric cable between the contact elements, which get in contact with the smart card, and the computer. This makes is extremely difficult to tap the smart card. In fact, the wires connecting the contact elements can be arranged within the printed wiring board. This makes is impossible to tap the information of the smart card on the printed wiring board. One would have to destroy the printed wiring board, to get electrical access to the contact elements. Therefore, the arrangement according to the invention results in a high security access protected computer.

### BRIEF DESCRIPTION OF THE DRAWINGS

- Figure 1: is a perspective view of a computer arranged in a housing;
- Figure 2: is a vertical cross-section along the line A-A through the housing of Figure 1 containing the computer;
- Figure 3: is a schematic plan view of the computer;
- Figure 4: is a view of a printed wiring board comprising a reading head with contact elements;
- Figure 5: is a vertical cross-section along a smart card reader.

### DESCRIPTION OF THE PREFERRED EMBODIMENT

Figure 4 shows the main board, a printed wiring board 2q, of a computer 2. The printed wiring board 2q comprises a lot of wires not shown in Figure 4. The wires are arranged on the surface or within the board 2q to connect all the electronic devices mounted on the board 2a and to build a computer bus 2k. The means 2o for interfacing a smart card 6 consists at least of some electric contact elements 2t, which get in direct contact with the chip 6a of the smart card 6, when the smart card 6 is inserted in a holder 2u. Figure 4 shows a reading head 2s comprising six contact elements 2t, the contact elements 2t projecting out of the reading head 2s. The contact elements 2t are made of metal. The contact elements 2t are electrically connected to a chipset 2w for a smart card reader. The chipset 2w has an interface to the computer bus 2k, so that information can be transferred between the processor 2b and the chip 6a of the smart card 6 being in contact with the contact elements 2t.

The reading head 2s and the chipset 2w is mounted on the printed wiring board 2q by using surface mounted devices (SMD). The wires connecting the reading head 2s, the chipset 2w and the computer bus 2k can be arranged on the surface of the printed wiring board 2q and/or within the printed wiring board 2q.

Figure 5 shows a side view of another embodiment of means 2o for interfacing a smart card 6. The means comprises two contact elements 2t, which are part of the printed wiring board 2q and which are projecting the surface of the printed wiring board 2q. Each contact element 2t is connected with a wire 2v, which is guides inside the printed wiring board 2q along a certain length. A holder 2u for mechanically guiding the smart card 6 is connected with the printed wiring board 2q, to place the smart card 6 in a defined position with respect to the contact elements 2t.

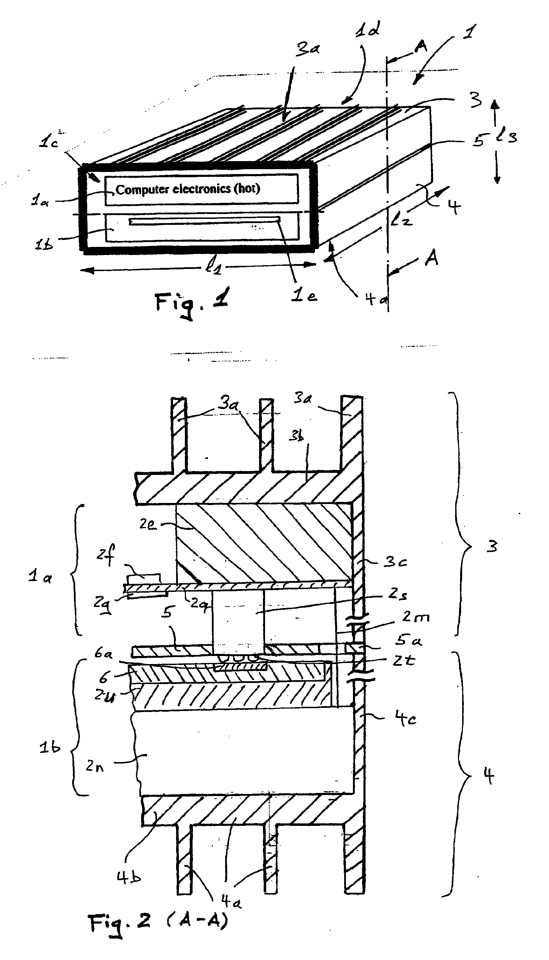

Figure 1 shows the housing 1 comprising a u-shaped housing cover 3 arranged on the top, and a u-shaped housing floor 4 arranged on the bottom. An insulator member 5 having the shape of a plate is arranged between the housing cover 3 and the housing floor 4 to prevent a thermal flow between the housing cover 3 and the housing floor 4. The insulator member 5 separates the inner space of the housing 1 in a hot compartment 1a arranged on the top, and a cold compartment 1b arranged on the bottom. A front panel 1c and a rear panel 1d is connected with the housing cover 3 and the housing floor 4, the front panel 1c and the rear panel 1d having some recesses for example for an electrical connector. The front panel 1c and the rear panel 1d of the housing 1 can also be part of the housing cover 3 and/or the housing floor 4. The computer electronics which radiates some heat is arranged in the hot compartment 1a. The mass storage media, like the hard disk or the CD-drive, which radiate little heat, are arranged in the cold compartment 1b. The housing cover 3 comprises a passive cooling member 3a with outwardly projecting cooling ribs. The housing floor 4 may also have a passive cooling member 4a. A slot 1e for the smart card 6 is arranged on the front panel 1c.

The housing 1 can be built in different sizes, preferably in the size of a book-sized computer. In one preferred embodiment, the housing has a length 11 of 15 cm, a depth 12 of 15 cm and a height 13 of 7 cm.

A vertical cross-section along the line A-A of Figure 1 is disclosed in Figure 2. The housing cover 3 comprises a top wall 3b with projecting cooling ribs 3a and a side wall 3c. The housing floor 4 comprises a bottom wall 4b with projection cooling ribs 4a and a side wall 4c. A plate shaped insulator member 5 is arranged between the housing cover 3 and the housing floor 4, separating the inner volume of the housing 1 into two separate compartments 1a,1b. The insulator member 5 consist of an insulating material and has a thickness of 2 mm. There is no direct contact between the housing cover 3 and the housing floor 4, but the side walls 3c, 4c of the housing cover 3 and housing floor 4 are both in touch with an edge portion 5a of the insulator member 5, to prevent a thermal flow between the housing cover 3 and the housing floor 4. To further increase the thermal resistance between the top wall 3b or the bottom wall 4b and the insulator member 5, the thickness of the wall 3b,4b is at least three times more than the thickness of the side wall 3c,4c.

The computer electronics, for example comprising the microprocessor 2b, a graphic-chip 2g, a chipset 2f of a power supply 2e are mounted on a printed wiring board 2q. The printed wiring board 2q is arranged in the hot compartment. In order to produce a direct, thermally conductive connection from hot elements like the microprocessor module 2b or the power supply 2e, a direct connection of this elements with the inner side of the top wall 3b is provided. In the cold department 1b, a hard disk 2n is arranged. This elements are connected with the printed wiring board 2q by an electric connector 2m, for example built as an ISA-Bus. The insulator member 5 has a small opening 5b, through which the connector 2m is guided. In one preferred embodiment an additional seal is used at the opening 5b, so that no air can flow between the cold compartment 1b and the hot compartment 1a. The insulator member 5 has a further opening, through which the reading head 2s is projecting. In the cold department 1b, the holder 2u for the smart card 6 is arranged. The holder 2u defines the final position of the smart card 6, so that the chip 6a gets in contact with the contact elements 2t. The advantage of this embodiment is, that the smart card 6 is arranged on the cold side 1b, which prolongs the lifetime of the smart card 6, and that the electronics of the smart card reader 2o being arranged on the printed wiring board 2q, which results in an improved access protection.

Due to the thermal insulation of the hot compartment 1a versus the cold compartment 1b, there is a temperature difference of for example 20°C there between. The expression "cold compartment" means, that the temperature in this compartment is significantly lower than the temperature in the hot compartment. Therefore, computer elements which need to be operated a lower temperature, can be arranged in the cold compartment. This concepts allows to arrange a computer 2 in a very small housing 1, and to use only passive cooling means for cooling all the element of the computer 2.

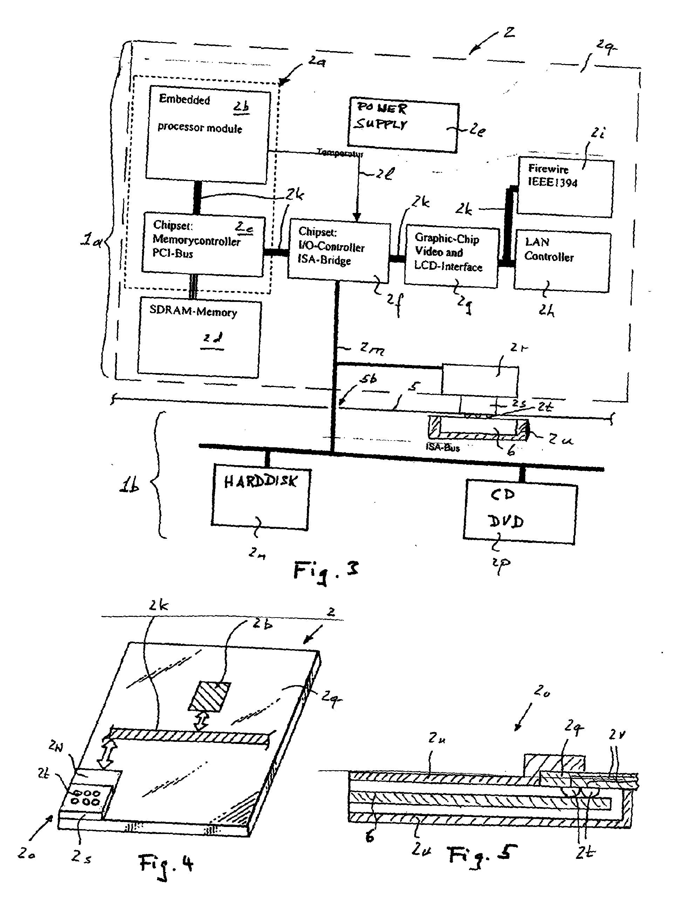

Figure 3 shows a schematic plan view of the computer 2, which comprises element 2a to 2u. A module 2a comprising an embedded processor module 2b with the micro processor and a chipset 2c, is connected with the main board 2q, a printed wiring board. On the printed wiring board, 2q further components are arranged like SDRAM-Memory 2d, chipset 2f, graphic-chip 2g, LAN controller 2h, firewire 2i, power supply 2e, electronics of the smart card reader 2r and the reading head 2s. All this elements are arranged in the hot compartment 1a. In the cold compartment 1b, separated by the insulator member 5, the hard disk 2n, a CD- or DVD-drive 2p and the holder 2u for the smart card 6 is arranged. All elements 2a to 2p and 2r are connected by a computer bus 2k, 2m. The means 2o for interfacing the smart card 6 being partly arranged in the hot compartment 1a and partly in the cold compartment 1b.

The computer 2 disclosed in Figure 3 by be working as a personal computer and may be 100% compatible to a X86 system. All peripheral connectors are located on the rear side 1d. The peripheral devices are connected with a cable to the computer 2.

Status indicators and switches for the operator are located on the front side 1c. The smart card 6 and a removable mass storage media 1b, like a CD, can be inserter from the front side 1c.

## Claims

1. Access protected computer (2) comprising means (2o) for interfacing a smart card (6), **characterized in that** the means (2o) are mounted onto or are part of a printed wiring board (2q) of the computer (2).

2. Access protected computer (2) according to claim 1, **characterized in that** the printed wiring board (2q) is the main board of the computer (2).

3. Access protected computer (2) according to one of the proceeding claims, **characterized in that** the printed wiring board (2q) comprises contact elements (2t) for interfacing the smart card (6).

4. Access protected computer (2) according to one of the proceeding claims, **characterized in that** a reading head (2s) comprising the contact elements (2t) for interfacing the smart card (6) is mounted on the printed wiring board (2q).

5. Access protected computer(2) according to one of the proceeding claims, **characterized in that** the holder (2u) for the smart card is mechanically connected to the printed wiring board (2q).

6. Access protected computer (2) according to one of the proceeding claims, **characterized in that** the path of at least some of the wires (2v) of the printed wiring board (2q) connecting the contact elements (2t) are arranged within the printed wiring board (2q) along a certain length.

7. Access protected computer (2) according to one of the proceeding claims, **characterized in that** a chipset (2w) interfacing the contact elements (2t) with a computer bus (2k) is arranged on the printed wiring board (2q).

8. Access protected computer (2) according to one of the proceeding claims, **characterized in that** the computer (2) is arranged in a computer housing (1) comprising a slot (1e) to insert a smart card (6), and the printed wiring board (2q) comprising the contact elements (2t) is arranged such, that the chip (6a) of the inserted smart card (6) gets in direct contact with the contact elements (2t).

9. Access protected computer (2) according to claim 8, the computer housing (1) comprises an insulator member (5), the computer (2) being arranged on one side of the insulator member (5), the holder (2u) for the smart card (6) being arranged on the other side of the insulator member (5), and the contact elements (2t) being arranged such as to contact the chip (6a) of the smart card (6) with the printed wiring board (2q).

10. Access protected computer (2) according to claim 9, the computer (2) being arranged above the insulator member (5) and the holder (2u) for the smart card (6) being arranged below the insulator member (5).
